# EUROPEAN PATENT SPECIFICATION

(11) **EP 3 113 944 B1**
(45) Date of publication and mention of the grant of the patent: **26.09.2018**
(21) Application number: 15707946.8
(22) Date of filing: 04.03.2015
(51) Int. Cl.: B32B 27/08

(54) **MULTILAYER TUBE AND USE THEREOF FOR FLUID TRANSPORTATION AT MEDIUM PRESSURE**
MEHRSCHICHTROHR UND VERWENDUNG DAVON ZUR FLUIDFÖRDERUNG BEI MITTLEREM DRUCK
TUBE MULTICOUCHE ET SON UTILISATION POUR UN TRANSPORT DE FLUIDE À MOYENNE PRESSION

(30) Priority: 05.03.2014 IT MI20140341
(43) Date of publication of application: 11.01.2017
(73) Proprietor: NUPI INDUSTRIE ITALIANE S.p.A., 21052 Busto Arsizio (VA) (IT)
(72) Inventor: BRUSI, Maria Roberta, I-21052 Busto Arsizio (VA) (IT); LORUSSO, Katia, I-21052 Busto Arsizio (VA) (IT); GENONI, Marco, I-21052 Busto Arsizio (VA) (IT)
(74) Representative: Bottero, Carlo
(86) International application number: PCT/EP2015/054531
(87) International publication number: WO 2015/132306

(56) References cited:
- WO-A1-98/00286
- WO-A2-00/59706
- US-A- 4 594 386
- US-A1- 2004 058 113

## Description

The present invention concerns a multilayer tube and use thereof for fluid transportation at medium pressure.

In the oil industry it is very common to use piping made in thermoplastic material for transporting hydrocarbons within the extraction site and from the extraction site to the refinery (the so called "upstream" sector), and for transporting the hydrocarbons after refining into the refinery and from the latter to the storing area and to the end user (the so called "downstream" sector).

Concerning, in particular, the "upstream" section, the material the tubes are made from must have high impermeability to hydrocarbons and high resistance to attack of other components of crude oil, such as water, sulphur compounds, and other corrosive compounds. Such a chemical resistance must moreover be combined with high mechanical performance, both during installation (for example high compression and impact resistance, even for installations in extreme temperature conditions), and during use (for example high internal pressure resistance). Finally, such tubes must be provided with a flexibility such as to be handled with a certain ease both during production and during use, and to be wound on coils for storing and transporting them.

There are numerous combinations of proposed materials in the prior art for making multilayer tubes for applications in the oil field.

For example, in patent application US 2004/0058113 flexible piping is illustrated for fluid transportation in offshore oil extraction platforms in which there is an internal flexible layer that is not liquid-tight, made up, for example, of a helically wound metal band, around which a multilayer structure is extruded that allows the tube to be liquid-tight, which comprises: an inner layer in thermoplastic polymer (in particular a polyamide); optionally one intermediate layer with an adhesive function; an outer layer consisting of a polyolefin (for example high density polyethylene-HDPE). Optionally the outer layer in polyolefin is in turn coated with a further adhesive layer and an outer layer in thermoplastic material, in particular a polyamide.

In patent application US 2006/0083884 a multilayer tube is described, in particular for transporting fuel in engines, comprising, from the interior to the exterior: an inner layer in polyolefin (for example polyethylene); a first intermediate layer with an adhesive function (in particular a polyolefin/polyamide mixture); a second intermediate layer consisting of an ethylene/vinylidene alcohol (EVOH) copolymer; a third intermediate layer of polyamide; an outer layer with protective function, for example a thermoplastic elastomer based on propylene and ethylene/propylene/diene rubber - PP-EPDM, or a polyester.

WO 2015/132306 discloses a multilayer tube for transporting hydrocarbons in a motor vehicle system. The multilayer tube comprises at least an internal layer comprising polyamide possibly mixed with an elastomer and an external layer comprising a polyolefin.

The Applicant primarily aims to make multilayer tubes that are suitable for transporting fluids, in particular hydrocarbons, even chemically aggressive ones, at medium inner pressure, generally up to 40/50 bar in operation, which at the same time are provided with sufficiently high mechanical performance and flexibility so as to be stored on coils having dimensions that are not too large (generally the winding diameter is around 1400 mm).

The Applicant has now found that these and other purposes, which are illustrated in greater detail in the following description, can be achieved by making a multilayer tube comprising an inner layer comprising at least one polyamide in admixture with at least one elastomer, which is provided with high mechanical performance, in particular high resistance to the inner pressure exerted by the transported fluid, whilst ensuring a suitable level of flexibility, said inner layer being coated outside with at least one layer comprising at least one polyolefin, in particular high density polyethylene (HDPE) or medium density polyethylene (MDPE), which makes it possible to protect the polyamide layer from external agents. In one preferred embodiment, the inner layer comprising at least one polyamide in admixture with at least one elastomer is sandwiched between two layers comprising at least one polyolefin. In such a way, the polyamide layer is also protected internally, in particular in the case in which the transported fluid contains products that can cause degradation of the polyamide, in particular water, which is often present in the hydrocarbons after extraction, which can cause hydrolysis of the polyamide, especially at high temperatures, with a consequent reduction of the molecular weight and of the mechanical resistance properties of the material. A layer of polymer material having an adhesive function is interposed between said layers.

The multilayer tubes of the present invention have a high long-term hydrostatic strength, preferably from 20 MPa to 45 MPa, measured by the MRS (Minimum Required Strength) rating according to standard IS0 9080.

In a first aspect, the present invention thus concerns a multilayer tube for fluid transportation, comprising, from the interior to the exterior:
an inner layer comprising at least one polyamide in admixture with at least one elastomer;
a first adhesive layer;
a first layer comprising at least one polyolefin.

Preferably, the multilayer tube further comprises a second layer comprising at least one polyolefin placed internally with respect to the inner layer and bonded to the inner layer by a second adhesive layer.

As regards the first and optionally the second layer comprising at least one polyolefin, these can have the same or different compositions. The polyolefin is preferably a high density polyethylene (HDPE) or a medium density polyethylene (MDPE), having a density from 0.926 to 0.970 g/cm³, preferably from 0.930 to 0.965 g/cm³ (according to standard ASTM D 4883-08). These are ethylene homopolymers or ethylene copolymers with low quantity (in general lower than 5% by weight) of an alpha olefin C₃-C₁₂, selected for example from: propylene, 1-butene, 1-pentene, 4-methyl-1-pentene, 1-hexene, 1-octene, 1-dodecene.

As an alternative to HDPE, the polyolefin can be a polypropylene, for example:
(i) a propylene homopolymer or a propylene copolymer with at least one olefinic comonomer selected from ethylene and alpha-olefin C₄-C₁₂, said at least one comonomer being present in an amount that is preferably from 0.2 to 10% in moles, more preferably from 0.5 to 8% in moles;
(ii) a heterophasic copolymer of propylene with ethylene, comprising a thermoplastic phase formed by a propylene homopolymer or copolymer according to point (i) in which an elastomeric phase is dispersed, which consists of an elastomeric copolymer of ethylene with at least one alpha-olefin C₃-C₁₂, preferably with propylene, and optionally with small amounts of a diene; preferably the elastomeric copolymer comprises from 15 to 70% by weight of ethylene and from 30 to 85% by weight of propylene, with respect to the total weight of the elastomeric phase.

The compositions of the first and possibly of the second layer can optionally comprise, in addition to at least one polyolefin, additives of conventional use, such as: antioxidants, colourants, pigments, process adjuvants, carbon black.

As regards the inner layer, this comprises at least one polyamide in admixture with at least one elastomer.

As known, polyamides are thermoplastic polymers deriving from polycondensation of at least one amino acid or of at least one lactam, or a mixture between at least one diamine and at least one bicarboxylic acid. Particularly preferred for the purposes of the present invention are long-chain aliphatic polyamides, obtained by polycondensation of an aliphatic diamine having from 6 to 20 carbon atoms with an aliphatic bicarboxylic acid having from 10 to 20 carbon atoms, which have better performance, with respect to short-chain polyamides (like for example PA-6 and PA-6,6), in terms of processibility and flexibility, in addition to having a lower level of hygroscopicity. Preferably, the polyamide is selected from:
(a) PA-6,10, obtainable by polycondensation of hexamethylenediamine and 1,10-decandioic acid;
(b) PA-6,12, obtainable by polycondensation of hexamethylenediamine and 1,12-dodecandioic acid;
(c) PA-9,12, obtainable by polycondensation of 1,9-diamine-nonane and 1,12-dodecandioic acid;
(d) PA-10,10, obtainable by polycondensation of 1,10-diamine-decane and 1,10-decandioic acid;
(e) PA-10,12, obtainable by polycondensation of 1,10-diamine-decane and 1,10-dodecandioic acid;
and mixtures thereof.

Notably, when the multilayer tube further comprises a second layer comprising at least one polyolefin placed internally with respect to the inner layer and bonded to the inner layer by a second adhesive layer, the polyamide used in the inner layer preferably is a PA-6 or PA-6,6 polyamide. In the sandwich structure of this preferred embodiment, in fact, the inner layer comprising the polyamide in admixture with the elastomer is protected also on the inner side from the possible action of agents that can cause degradation of the polyamide, in particular water, which can cause its hydrolysis. Polyamides PA-6 and PA-6,6, although are more sensitive to degradation, in particular hydrolysis, allows a more cost-effective production of the multilayer tubes of the present invention.

As known, polyamide PA6 can be obtained by ring opening polymerization of caprolactam, whereas polyamide PA-6,6 can be obtained by polycondensation of hexamethylenediamine and adipic acid.

With the purpose of increasing elastic properties of the polyamides, in particular flexibility, these are mixed with at least one elastomer. The amount of said at least one elastomer is preferably comprised from 3% to 30% by weight, more preferably from 5 and 20% by weight, with respect to the total weight of the polymer mixture.

Preferably, said at least one elastomer is an ethylene/propylene (EPR) copolymer or an ethylene/propylene/diene (EPDM) terpolymer. More preferably, said at least one elastomer is a copolymer or terpolymer comprising from 5 to 25% by weight of ethylene, from 75 to 95% by weight of propylene, and optionally an amount not higher than 10% by weight of a diene. Preferably, the diene is selected from: conjugated or non-conjugated linear diolefins C₄-C₂₀ (for example 1,3-butadiene, 1,4-hexadiene, 1,6-octadiene); mono-cyclic or poly-cyclic dienes (for example 1,4-cyclohexadiene, 5-ethylidene-2-norbornene, 5-methylene-2-norbornene).

Preferably, in order to increase compatibility between the polyamide and the elastomer, the latter is grafted with an amount from 0.05 to 5% by weight, more preferably from 0.1 to 3% by weight, of at least one mono- or bi-carboxylic acid containing an ethylenic unsaturation, or a derivative thereof. The preferred are: maleic acid, maleic anhydride, fumaric acid, citaconic acid, itaconic acid, acrylic acid, methacrylic acid, and anhydrides or esters derived therefrom, or mixtures thereof. Particularly preferred is maleic anhydride.

Further details on polyamides in admixture with at least one elastomer that are suitable for carrying out the present invention can be found, for example, in US 4.594.386, WO 01/053415 and WO 02/057366.

Flexibilization of the polyamide with an elastomer allows obtaining a polymer material having sufficient flexibility without using plasticizers or in any case using limited amounts thereof, so as to avoid possible interaction between the compatibilizing material and the transported fluid, especially in the case of transporting hydrocarbons.

Between the polyolefin and polyamide layers a layer of material having adhesive properties is interposed, so as to ensure integrity of the tube for a long time even after intense and/or repeated stresses.

Preferably, the first and optionally the second adhesive layer, which are the same or different from one another, comprise a polyolefin grafted with at least one mono- or bi- carboxylic acid containing an ethylenic unsaturation, or a derivative thereof. Preferred are: maleic acid, maleic anhydride, fumaric acid, citaconic acid, itaconic acid, acrylic acid, methacrylic acid, and anhydrides or esters derived therefrom, or mixtures thereof. Particularly preferred is maleic anhydride. The polyolefin on which said at least one mono- or bi-carboxylic acid or a derivative thereof is grafted is preferably selected from: ethylene homopolymers or ethylene copolymers with at least one alpha-olefin C₃-C₁₂, for example: propylene, 1-butene, 1-pentene, 4-methyl-1-pentene, 1-hexene, 1-octene, 1-dodecene. The amount of grafted monomer is preferably from 0.5 to 10% by weight, preferably from 1 to 5% by weight, with respect to the total weight of the polyolefin. Polyolefins grafted with maleic anhydride are commercially available, for example, with the brands Bynel™ (Du Pont), Yparex™ (Yparex), and others.

Preferably the inner layer comprising at least one polyamide in admixture with at least one elastomer has a SDR value (i.e. the ratio diameter/thickness of the same layer) from 7 to 26, more preferably from 10 to 18.

The first and optionally second layer comprising at least one polyolefin preferably have a thickness from 0.1 mm to 5 mm, more preferably from 0.2 to 3 mm.

The first and optionally second adhesive layer preferably have a thickness from 0.05 mm to 2 mm, more preferably from 0.1 to 1 mm.

Preferably, the multilayer tube further comprises a second layer comprising at least one polyolefin placed internally with respect to the inner layer and bonded to the inner layer by a second adhesive layer.

The multilayer tubes in accordance with the present invention can be made according to known methods, in particular by extruding the different polymer materials by means of a multi-head extruder, so as to obtain a coextrusion of the various layers, preferably in a single stroke.

According to a further aspect, the present invention concerns a system for transporting fluids at medium pressure, comprising a plurality of multilayer tubes as defined above that are joined together by electro-soldered joints made from a polyamide.

By "medium pressure" it is preferably meant a pressure of from 20 bar to 100 bar, more preferably from 20 bar to 50 bar.

Preferably, the joints are electro-soldered on two opposite ends of two tubes in accordance with the present invention, after removal from said tubes of a predetermined portion of the first layer comprising at least one polyolefin. In such a way the underlying layer formed by the polyamide is exposed, so as to ensure a highly-resistant welding between the ends of the tubes and the joint also made from a polyamide, preferably made from at least one polyamide in admixture with at least one elastomer in accordance with the present invention. The electro-soldered joints can be made in accordance with known methods and structures by moulding the plastic material as described above.

The multilayer tubes according to the present invention are preferably used for transporting hydrocarbons within an extraction site and/or from an extraction site to a refinery (the so called "upstream" sector). The hydrocarbons can be of various kinds, both from conventional oil wells, generally having low water content, and from shale oil, which, on the other hand, contains several pollutants and non-negligible amounts of water.

Another use of the multilayer tubes according to the present invention is that in the field of transportation of water and/or of water distribution, for example in aqueducts for civil and/or industrial use.

The present invention shall now be illustrated with particular reference to the following figures, in which:
figure 1 is a cross-section view of a tube according to a first embodiment of the present invention;
figure 2 is a cross-section view of a tube according to a second embodiment of the present invention.

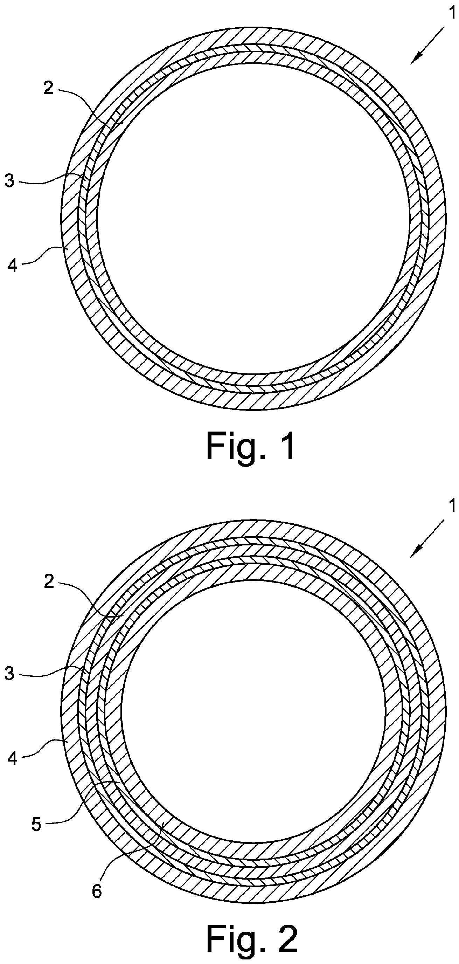

With reference to figures 1 and 2, the multilayer tube (1) in accordance with the present invention comprises, from the interior to the exterior: an inner layer (2) comprising at least one polyamide in admixture with at least one elastomer; a first adhesive layer (3); a first layer (4) comprising at least one polyolefin. According to the embodiment illustrated in figure 2, the multilayer tube (1) further comprises a second layer (6) comprising at least one polyolefin placed internally with respect to the inner layer and bonded to the inner layer by a second adhesive layer (5) .

The following working examples are provided merely with the purpose of illustrating the present invention and must not be intended to limit the scope of protection of the attached claims.

### EXAMPLE 1

A multilayer tube was made by coextrusion of different polymer materials by means of a multi-head extruder; the multilayer tube consisted of the following layers, from the exterior to the interior:
a first layer made up of MDPE (product Eltex™ TUB172 - Ineos, having a density equal to 0.939 g/cm³), with a thickness equal to 1 mm;
a first adhesive layer made up of linear low density polyethylene (LLDPE) grafted with maleic anhydride (product Bynel™ 4157 - DuPont), with a thickness equal to 0.1 mm;
an inner layer, having a thickness equal to 5.3 mm and DTR = 17, made up of a mixture between: (i) a polyamide 6,10 modified with a functionalized elastomer EPR (product Zytel™ RS LC 4601 - DuPont); and (ii) a polyamide 6,10 as such (product Zytel™ RS LC 3090 - DuPont) (weight ratio (i):(ii) = 1:2);
a second adhesive layer identical to the first one;
a second layer that made up of MDPE identical to the first one.

The tube thus produced was tested for resistance to internal pressure exerted by a fluid at different temperatures, according to standard UL 971 (Standard for Nonmetallic Underground Piping for Flammable Liquids). The results obtained are the following (pressure up to tube burst):

**Table 1.**

| Temperature (°C) | Burst pressure (bar) |
|---|---|
| 23 | 80 |
| 60 | 62 |
| 80 | 48 |
| 95 | 37 |

According to the aforementioned standard UL 971, also a crush resistance test, a drop test and an impact test of the same tube kept at low temperature (-30°C), were also carried out. The tube passed all the aforementioned tests.

The same tube was also tested for pressure resistance over time according to standard ISO 16486 (safety factor: 1.7). The results are shown in Table 2, where the duration represents the test time without observing damage on the tube, whereas the minimum duration is that required by the standard:

**Table 2.**

| Pressure (bar) | Temperature (°C) | Minimum duration (hours) | Duration (hours) |
|---|---|---|---|
| 26.5 | 80 | 165 | 3000 |
| 46.8 | 20 | 1000 | 2000 |

Segments of the same tube were joined by electro-soldered joints made from polyamide, and subjected to tensile tests according to standard ASTM F1973. The pulling force necessary for separating the two segments was measured to be 85,000 N. The joined segments were also subjected to decohesion tests at different temperatures (-10°C, +50°C and +23°C) according to standard ISO 13954: the tests were passed in all cases.

## Claims

1. Multilayer tube for fluid transportation, comprising, from the interior to the exterior:
an inner layer comprising at least one polyamide in admixture with at least one elastomer;
a first adhesive layer;
a first layer comprising at least one polyolefin; **characterized in that** it further comprises a second layer comprising at least one polyolefin placed internally with respect to the inner layer and bonded to the inner layer by a second adhesive layer.

2. Multilayer tube according to claim 1, wherein the polyolefin is a high density polyethylene (HDPE) or a medium density polyethylene (MDPE), having a density from 0.926 to 0.970 g/cm³, preferably from 0.930 to 0.965 g/cm³.

3. Multilayer tube according to any of the preceding claims, wherein said at least one polyamide is selected from:
(a) PA-6,10, obtainable by polycondensation of hexamethylenediamine and 1,10-decandioic acid;
(b) PA-6,12, obtainable by polycondensation of hexamethylenediamine and 1,12-dodecandioic acid;
(c) PA-9,12, obtainable by polycondensation of 1,9-diamine-nonane and 1,12-dodecandioic acid;
(d) PA-10,10, obtainable by polycondensation of 1,10-diamine-decane and 1,10-decandioic acid;
(e) PA-10,12, obtainable by polycondensation of 1,10-diamine-decane and 1,10-dodecandioic acid.

4. Multilayer tube according to claim 1, wherein said at least one polyamide is selected from: PA-6 and PA-6,6.

5. Multilayer tube according to any of the preceding claims, wherein said at least one polyamide is in admixture with at least one elastomer, the amount of said at least one elastomer being from 3% to 30% by weight, preferably from 5 to 20% by weight, with respect to the total weight of the polymer mixture.

6. Multilayer tube according to any of the preceding claims, wherein said at least one polyamide is in admixture with at least one elastomer selected from: ethylene/propylene copolymers (EPR) and ethylene/propylene/diene terpolymers (EPDM).

7. Multilayer tube according to claim 5, wherein said at least one elastomer is a copolymer or terpolymer comprising from 5 to 25% by weight of ethylene, from 75 to 95% by weight of propylene, and optionally an amount not higher than 10% by weight of a diene.

8. Multilayer tube according to claim 6 o 7, wherein said at least one elastomer is grafted with an amount of from 0.05 to 5% by weight, preferably from 0.1 to 3% by weight, of at least one mono- or bicarboxylic acid containing an ethylenic unsaturation or a derivative thereof, preferably maleic anhydride.

9. Multilayer tube according to any of the preceding claims, wherein the first and the second adhesive layer, equal or different from each other, comprise a polyolefin grafted with at least one mono- or bi-carboxylic acid containing an ethylenic unsaturation or a derivative thereof, preferably maleic anhydride.

10. Multilayer tube according to any of the preceding claims, wherein the inner layer comprising at least one polyamide in admixture with at least one elastomer has a SDR value (i.e. a ratio diameter/thickness of the same layer) from 7 to 26, preferably from 10 to 18.

11. Multilayer tube according to any of the preceding claims, wherein the first and the second layer comprising at least one polyolefin have a thickness from 0.1 mm to 5 mm, preferably from 0.2 to 3 mm.

12. Multilayer tube according to any of the preceding claims, wherein the first and the second adhesive layer have a thickness from 0.05 mm to 2 mm, preferably from 0.1 to 1 mm.

13. System for transporting fluids at medium pressure, comprising a plurality of multilayer tubes according to any of claims from 1 to 13, joined together by electro-soldered joints formed by a polyamide.

14. Use of a multilayer tube according to any of claims from 1 to 12, for transporting hydrocarbons within an extraction site and/or from an extraction site to a refinery.

15. Use of a multilayer tube according to any of claims from 1 to 12, for transporting and/or distributing water, particularly in aqueducts for civil and/or industrial use.

## Patentansprüche

1. Mehrschichtrohr zur Fluidförderung, umfassend, von innen nach außen:
eine innere Schicht, umfassend wenigstens ein Polyamid in Beimischung mit wenigstens einem Elastomer;
eine erste Adhäsivschicht;
eine erste Schicht, umfassend wenigstens ein Polyolefin;
**dadurch gekennzeichnet, dass** es weiter eine zweite Schicht umfasst, umfassend wenigstens ein Polyolefin, das im Inneren der Innenschicht angeordnet und mit der Innenschicht durch eine zweite Adhäsivschicht verbunden ist.

2. Mehrschichtrohr nach Anspruch 1, wobei das Polyolefin ein hochdichtes Polyethylen (HDPE) oder ein mitteldichtes Polyethylen (MDPE) mit einer Dichte von 0,926 bis 0,970 g/cm³, vorzugsweise von 0,930 bis 0,965 g/cm³ ist.

3. Mehrschichtrohr nach einem der vorstehenden Ansprüche, wobei das wenigstens eine Polyamid ausgewählt ist aus:
(a) PA-6,10, erhältlich durch Polykondensation von Hexamethylendiamin und 1,10-Decandisäure;
(b) PA-6,12, erhältlich durch Polykondensation von Hexamethylendiamin und 1,12-Dodecandisäure;
(c) PA-9,12, erhältlich durch Polykondensation von Nonan-1,9-diamin und 1,12-Dodecandisäure;
(d) PA-10,10, erhältlich durch Polykondensation von Decan-1,10-diamin und 1,10-Decandisäure;
(e) PA-10,12, erhältlich durch Polykondensation von Decan-1,10-diamin und 1,10-Dodecandisäure.

4. Mehrschichtrohr nach Anspruch 1, wobei das wenigstens eine Polyamid ausgewählt ist aus: PA-6 und PA-6,6.

5. Mehrschichtrohr nach einem der vorstehenden Ansprüche, wobei das wenigstens eine Polyamid in Beimischung mit wenigstens einem Elastomer ist, wobei die Menge des wenigstens einen Elastomers von 3% bis 30 Gew.-%, vorzugsweise von 5% bis 20 Gew.-% in Bezug auf das Gesamtgewicht der Polymermischung beträgt.

6. Mehrschichtrohr nach einem der vorstehenden Ansprüche, wobei das wenigstens eine Polyamid in Beimischung mit wenigstens einem Elastomer ist, ausgewählt aus: Ethylen/Propylen-Copolymeren (EPR) und Ethylen/Propylen/Dien-Terpolymeren (EPDM).

7. Mehrschichtrohr nach Anspruch 5, wobei das wenigstens eine Elastomer ein Copolymer oder Terpolymer ist, umfassend von 5 bis 25 Gew.-% Ethylen, von 75 bis 95 Gew.-% Polypropylen und wahlweise eine Menge von nicht mehr als 10 Gew.-% eines Diens.

8. Mehrschichtrohr nach Anspruch 6 oder 7, wobei das wenigstens eine Elastomer mit einer Menge von 0,05 bis 5 Gew.-%, vorzugsweise von 0,1 bis 3 Gew.-% von wenigstens einer Mono- oder Dicarbonsäure gepfropft ist, enthaltend eine ethylenische Ungesättigtheit oder ein Derivat hiervon, vorzugsweise Maleinsäureanhydrid.

9. Mehrschichtrohr nach einem der vorstehenden Ansprüche, wobei die erste und die zweite Adhäsivschicht, die gleich oder voneinander unterschiedlich sind, ein Polyolefin umfassen, das mit wenigstens einer Mono- oder Dicarbonsäure gepfropft ist, enthaltend eine ethylenische Ungesättigtheit oder ein Derivat hiervon, vorzugsweise Maleinsäureanhydrid.

10. Mehrschichtrohr nach einem der vorstehenden Ansprüche, wobei die Innenschicht, umfassend wenigstens ein Polyamid in Beimischung mit wenigstens einem Elastomer, einen SDR-Wert (d.h. ein Durchmesser-/Dickenverhältnis derselben Schicht) von 7 bis 26, vorzugsweise von 10 bis 18 aufweist.

11. Mehrschichtrohr nach einem der vorstehenden Ansprüche, wobei die erste und die zweite Schicht, umfassend wenigstens ein Polyolefin, eine Dicke von 0,1 mm bis 5 mm, vorzugsweise von 0,2 mm bis 3 mm aufweisen.

12. Mehrschichtrohr nach einem der vorstehenden Ansprüche, wobei die erste und die zweite Adhäsivschicht eine Dicke von 0,05 mm bis 2 mm, vorzugsweise von 0,1 mm bis 1 mm aufweisen.

13. System zur Fluidförderung bei mittlerem Druck, umfassend eine Mehrzahl von Mehrschichtrohren nach einem der Ansprüche 1 bis 13, die mit durch ein Polyamid gebildete Elektroschweißverbindungen miteinander verbunden sind.

14. Verwendung eines Mehrschichtrohrs nach einem der Ansprüche 1 bis 12 zur Förderung von Kohlenwasserstoffen innerhalb eines Förderorts und/oder von einem Förderort zu einer Raffinerie.

15. Verwendung eines Mehrschichtrohrs nach einem der Ansprüche 1 bis 12 zur Förderung und/oder Verteilung von Wasser, insbesondere in Wasserleitungen für Wohn- oder Industriezwecke.

## Revendications

1. Tube multicouche pour le transport de fluide, comprenant, de l'intérieur vers l'extérieur :
une couche intérieure comprenant au moins un polyamide en mélange avec au moins un élastomère ;
une première couche adhésive ;
une première couche comprenant au moins une polyoléfine ;
**caractérisé en ce qu'**il comprend en outre une deuxième couche comprenant au moins une polyoléfine placé intérieurement par rapport à la couche intérieure et liée à la couche intérieure par une deuxième couche adhésive.

2. Tube multicouche selon la revendication 1, dans lequel la polyoléfine est un polyéthylène haute densité (HDPE) ou un polyéthylène moyenne densité (MDPE), ayant une densité de 0,926 à 0,970 g/cm³, de préférence de 0,930 à 0,965 g/cm³.

3. Tube multicouche selon l'une quelconque des revendications précédentes, dans lequel ledit au moins un polyamide est sélectionné parmi :
(a) PA-6,10, pouvant être obtenu par polycondensation d'hexaméthylènediamine et d'acide 1,10-décanedioïque ;
(b) PA-6,12, pouvant être obtenu par polycondensation d'hexaméthylènediamine et d'acide 1,12-dodécanedioïque ;
(c) PA-9,12, pouvant être obtenu par polycondensation de 1,9-diamine-nonane et d'acide 1,12-dodécanedioïque ;
(d) PA-10,10, pouvant être obtenu par polycondensation de 1,10-diamine-décane et d'acide 1,10-décanedioïque ;
(e) PA-10,12, pouvant être obtenu par polycondensation de 1,10-diamine-décane et d'acide 1,10-dodécanedioïque.

4. Tube multicouche selon la revendication 1, dans lequel ledit au moins un polyamide est sélectionné parmi : PA-6 et PA-6,6.

5. Tube multicouche selon l'une quelconque des revendications précédentes, dans lequel ledit au moins un polyamide est en mélange avec au moins un élastomère, la quantité dudit au moins un élastomère étant de 3% à 30% en poids, de préférence de 5 à 20% en poids, par rapport au poids total du mélange polymère.

6. Tube multicouche selon l'une quelconque des revendications précédentes, dans lequel ledit au moins un polyamide est en mélange avec au moins un élastomère sélectionné parmi : des copolymères éthylène/propylène (EPR) et des terpolymères éthylène/propylène/diène (EPDM).

7. Tube multicouche selon la revendication 5, dans lequel ledit au moins un élastomère est un copolymère ou un terpolymère comprenant de 5 à 25% en poids d'éthylène, de 75 à 95% en poids de propylène, et éventuellement une quantité non supérieure à 10% en poids d'un diène.

8. Tube multicouche selon la revendication 6 ou 7, dans lequel ledit au moins un élastomère est greffé avec une quantité de 0,05 à 5% en poids, de préférence de 0,1 à 3% en poids, d'au moins un acide mono- ou bi-carboxylique contenant une insaturation éthylénique ou un dérivé de celui-ci, de préférence un anhydride maléique.

9. Tube multicouche selon l'une quelconque des revendications précédentes, dans lequel la première et la deuxième couche adhésive, égales ou différentes l'une de l'autre, comprennent une polyoléfine greffée avec au moins un acide mono- ou bi-carboxylique contenant une insaturation éthylénique ou un dérivé de celui-ci, de préférence un anhydride maléique.

10. Tube multicouche selon l'une quelconque des revendications précédentes, dans lequel la couche intérieure comprenant au moins un polyamide en mélange avec au moins un élastomère a une valeur de SDR (c'est-à-dire un rapport diamètre/épaisseur de la même couche) de 7 à 26, de préférence de 10 à 18.

11. Tube multicouche selon l'une quelconque des revendications précédentes, dans lequel la première et la deuxième couche comprenant au moins une polyoléfine ont une épaisseur de 0,1 mm à 5 mm, de préférence de 0,2 à 3 mm.

12. Tube multicouche selon l'une quelconque des revendications précédentes, dans lequel les première et deuxième couches adhésives ont une épaisseur de 0,05 mm à 2 mm, de préférence de 0,1 à 1 mm.

13. Système pour un transport de fluides à moyenne pression, comprenant une pluralité de tubes multicouche selon l'une quelconque des revendications 1 à 13, unis ensemble par des joints électro-soudés formés par un polyamide.

14. Utilisation d'un tube multicouche selon l'une quelconque des revendications 1 à 12, pour le transport d'hydrocarbures dans un site d'extraction et/ou d'un site d'extraction à une raffinerie.

15. Utilisation d'un tube multicouche selon l'une quelconque des revendications 1 à 12, pour le transport et/ou la distribution d'eau, en particulier dans des aqueducs à usage civil et/ou industriel.
